# EUROPEAN PATENT SPECIFICATION

(11) **EP 4 518 288 B1**
(45) Date of publication and mention of the grant of the patent: **04.11.2026**
(21) Application number: 23382888.8
(22) Date of filing: 31.08.2023
(51) Int. Cl.: H04L 65/1016, H04L 65/1046, H04L 65/1063, H04L 65/1073, H04L 65/1094, H04L 65/1104

(54) **A METHOD OF REGISTERING A SIP DEVICE, A NETWORK ENTITY AND A COMPUTER PROGRAM**
VERFAHREN ZUR REGISTRIERUNG EINER SIP-VORRICHTUNG, NETZWERKEINHEIT UND COMPUTERPROGRAMM
PROCÉDÉ D'ENREGISTREMENT D'UN DISPOSITIF SIP, ENTITÉ DE RÉSEAU ET PROGRAMME INFORMATIQUE

(43) Date of publication of application: 05.03.2025
(73) Proprietor: Vodafone Group Services Limited, Newbury RG14 2FN (GB)
(72) Inventor: PEDRUELO BRAGADO, Jesus, London, W2 6BY (GB); MONFORT MARTIN, Francisco, London, W2 6BY (GB); GASPAR DA SILVA, Joao Miguel, London, W2 6BY (GB)
(74) Representative: Boult Wade Tennant LLP

(56) References cited:
- EP-A1- 3 202 172

## Description

### Field of the invention

The present invention relates to registration of SIP devices. Specifically, the invention relates to registration of SIP devices with an IMS core network in a multi-device scenario.

### Glossary of terms

- IP: Internet Protocol
- IMS: IP Multimedia Subsystem
- AS: Application Server
- TAS: Telephony Application Server
- SIM: Subscriber Identity Module
- eSIM: Embedded SIM
- CSCF: Call Session Control Function
- IPSMGW: IP Short Messaging Gateway
- HSS: Home Subscriber Server
- HLR: Home Location Register
- IMPU: IP Multimedia Public Identity
- IMPI: IP Multimedia Private Identity
- IRS: Implicit Registration Set
- MD: Multi Device
- PUI: Public User Identity
- MSISDN: Mobile Station International Subscriber Directory Number
- LTE: Long-Term Evolution (4G)
- VoLTE: Voice over LTE
- SIP: Session Initiation Protocol
- SIP-URI: SIP Uniform Resource Identifier
- TEL-URI: Telephone Uniform Resource Identifier
- IMSI: International Mobile Subscriber Identity
- DVA: Digital Voice Adapter
- CSRN: Circuit Switched Routing Number
- MMTel: Multimedia Telephony Service
- CS: Circuit Switched
- EPS: Evolved Packet Switched
- OICK: Originating Intelligent Network Category Key
- CAMEL: Customized Application for Mobile network Enhanced Logic
- O-CSI: Originating - CAMEL Subscription Information
- SRVCC: Single Radio Voice Call Continuity
- iFC: Initial Filter Criteria
- SiFC: Shared Initial Filter Criteria
- SP: Service Profile

### Background

Network operators offer a service that involves permitting a subscriber to register multiple different SIM (or eSIM) devices, but to always use the same primary identity (the same telephonic number). Therefore, any outgoing calls from any of the multiple SIMs will always be shown at the called party end with the same telephonic identity (also referred to as a "primary identity"). For incoming calls, any call aiming to reach the common primary identity will cause all registered devices to ring, either simultaneously or sequentially (based on logic at the Application Server). The call may be picked up on any of the registered SIMs, which are all associated with an IRS profile of the subscriber.

A Mobile Network Operator can provision extra devices (secondary devices associated with the primary device) that will be part of the subscriber's main profile (also referred to as a "primary identity"), so that incoming calls cause all the devices to ring, either all at once or sequentially until the call is answered. Each of the secondary devices registers in the IMS Core to authenticate, get the credentials and service. At the time of registration, the device sends a register to the IMS Core, which causes a third-party registration towards the application server, such as telephony application server, TAS or SMS application server, SMS-AS. Each of these registrations may be referred to as a third-party registration because it relates to the secondary device but originates in the IMS Core, rather than from the device itself.

Third-party registrations from the Core to the TAS are sent based on a series of matching conditions with the current subscriber profile. In the case of the subscriber having multiple devices, the Core sends a third-party registration to the TAS one time per extra device (or SIM). In practice, this means that the IMS Core (specifically, the CSCF) will send as many third-party registrations to the TAS as the number of devices that are provisioned in the profile, whether the provisioned devices are registered or not. This is due to the existing 3GPP behaviour whereby the CSCF will execute the logic from the IFC that matches with a third party registration within the IRS, which in this case is for all identities. For example, if there are four devices provisioned by a subscriber, every time a registration comes from any of them, the CSCF will send four registrations to the TAS. Therefore, each device registration triggers four third-party registrations at the Core.

The current behaviour may lead to network congestion, data inconsistency at the TAS database and inefficiencies in signalling and processing.

Existing alternative solutions do not address issues with duplicated signalling and duplicated provisioning at the TAS. Moreover, alternative solutions have drawbacks in the service offering, such as emergency call back availability, CDR creation per SIM, or creation of extra provisioning flows.

EP 3 202 172 A1 discloses a method for associating multiple devices with a single telephone number. The method includes the steps of a device sending a registration request to a CSCF node and the CSCF node registering all IMPIs associated with the IMPU at a TAS.

### Summary

A method of registering a session initiation protocol, SIP, device is provided according to claim 1. The method comprises receiving, at a Call Session Control Function, CSCF, server, a SIP register message from a SIP device, wherein the SIP device is one of a plurality of SIP devices belonging to a set (e.g., an implicit registration set). The method further comprises selectively sending, by the CSCF, a third-party SIP register message to each of one or more application servers, wherein each third-party SIP register message relates to the SIP device.

The proposed method therefore reduces the number of third-party SIP register messages sent by the CSCF. This may improve signalling efficiency by avoiding duplication and so reducing the number of communications between the CSCF and the application server(s) (e.g., the TAS, SMS over IP Application Server, or IPSMGW). This also improves the efficiency of both the CSCF and the application server(s). Moreover, the proposed method results in fewer third-party SIP register messages being received by the application server(s) (such as TAS). The proposed methods convey the correct level of information to the application server(s) (i.e., the TAS receives the relevant third-party SIP register message but does not receive multiple irrelevant third-party requests, which then require filtering). Therefore, the proposed methods may avoid extra triggering at the application server(s). Previously, the TAS would receive multiple requests and would then need to contact the HSS with an extra query, to determine the true source device for the registration request. In the proposed method, there is only one request relating to the relevant device. Therefore, the TAS can act on this request since it already relates to the correct device. As a result, the proposed methods also improve the efficiency of the application server(s) and the HSS, by reducing subsequent queries sent to it by the TAS via Sh interface.

In prior art systems, enabling the support of SMS over IP can place strain on the network due to the impact of the third-party SIP register messages. In one example network with more than 4 million customers, the strain caused by network signalling due to messages related to SMS over IP was reduced by 45% after implementation of the proposed methods.

The set may be an implicit registration set, IRS, defined in the HSS. The set may include different identifiers for the SIP devices belonging to the set and corresponding Service Profiles.

The method may further comprise suppressing transmission to the one or more application servers of third-party SIP register messages relating to one or more other SIP devices of the plurality of SIP devices belonging to the set, wherein the one or more other SIP devices comprise SIP devices from which no SIP register message has been received at the CSCF.

Suppressing may comprise temporarily suppressing third-party SIP register messages relating to the one or more other SIP devices. If the CSCF subsequently receives a SIP register from another SIP device in the set, then third-party SIP register messages relating to that SIP device may be sent to the one or more application servers.

Each of the plurality of SIP devices belonging to the set may have a unique public user identity, PUI. Each third-party SIP register message may relate to the SIP device by comprising the PUI of the SIP device.

The method may further comprise obtaining, by the CSCF, the PUIs of each of the plurality of SIP devices belonging to the set from a subscriber database.

The method may further comprise obtaining, by the CSCF, a Service Profile and associated filter criteria corresponding to the SIP device from a subscriber database.

The method may further comprise obtaining a Service Profile corresponding to each SIP device belonging to the set. Each SIP device has a corresponding Service Profile. A Service Profile may apply to one or more devices in the set (in other words, multiple devices may share a Service Profile). The set may therefore include one or more Service Profiles.

The method may further comprise determining that the SIP register message from the SIP device matches a trigger in the Service Profile corresponding to the SIP device. The method may further comprise determining that the SIP register message from the SIP device matches associated filter criteria corresponding to the SIP device. Optionally, the method may further comprise, for each SIP device belonging to the set, determining whether the SIP register message matches a trigger in the Service Profile corresponding to the SIP device (for each SIP device and/or each Service Profile in the set).

The subscriber database may be a Home Subscriber Server, HSS.

The filter criteria may be Initial Filter Criteria, iFC, or Shared Initial Filter Criteria SiFC.

The one or more application servers may comprise a telephony application server, TAS.

The one or more application servers may comprise an Internet protocol short messaging gateway, IPSMGW, or any other type of SIP Application Server.

The SIP device may comprise a subscriber identity module, SIM, or an embedded SIM, eSIM.

Each of the plurality of SIP devices belonging to the set may comprise a subscriber identity module, SIM, or an embedded subscriber identity module, eSIM.

Each of the plurality of SIP devices belonging to the set may share a common primary identity.

The primary identity may be a Mobile Station International Subscriber Director Number, MSISDN.

The CSCF and the one or more application servers may reside in an IP Multimedia Subsystem, IMS.

The HSS may also reside in the IMS.

The method may further comprise sending credentials to the SIP device and authenticating the SIP device.

The method may further comprise receiving, at the CSCF server, an instruction to enable selective third-party registration.

The behaviour described in the above methods may be performed based on the fact that an instruction to enable selective third-party registration has been received (therefore, the step of receiving the instruction may occur first).

The selective behaviour may be configurable on the CSCF, so that some profiles may behave this optimized way, while some others do not (depending on the specific requirements of a service or a deployment, and in order to make the solution backwards compatible with other existing services).

The instruction may be stored as a parameter in an identity profile corresponding to the first set (or "identity"). In some examples, the parameter defined in the identity profile may define whether to perform selective registration or non-selective registration. In other words, the instruction to enable the selective behaviour may apply to a particular set of SIP devices (a particular identity).

The method may further comprise determining that the SIP register message relates to the set, in respect of which the instruction applies (in respect of which the instruction was received).

The method may further comprise receiving, at the CSCF server, an instruction to disable selective third-party registration. The method may further comprise receiving, at the CSCF server, a SIP register message from a second SIP device, wherein the second SIP device is one of a plurality of SIP devices belonging to a second set. The method may further comprise sending, by the CSCF server, a third-party SIP register message to one or more application servers, in respect of each device in the second set.

The method may further comprise storing the instruction as a parameter in an identity profile corresponding to a plurality of SIP devices belonging to a set (or "identity"), in respect of which the instruction applies.

The method may further comprise determining that the SIP register message relates to the second set, in respect of which the instruction applies.

Sending a third-party SIP register message to one or more application servers, in respect of each device in the set may comprise sending a third-party SIP register message to each (and every) of the one or more application servers in respect of each device in the set.

Receiving the instruction may comprise querying the identity profile corresponding to the set (the identity) and receiving the instruction as a parameter of the identity profile.

As described above, the instruction may apply at an identity level (the set comprising the plurality of SIP devices).

Where the instruction is applied at the identity level, this may result in instructions being applied at device level. However, the proposed change does not determine the behaviour of the third-party registration based on info from the device, but rather on its identity and the definition of its Service Profile.

Where the instruction applies at the identity level, the method may further comprise storing the instruction as a parameter in a Service Profile corresponding to one or more SIP devices belonging to the set.

Where the instruction applies at the identity level, the method may further comprise determining that the SIP register message relates to a SIP device corresponding to the Service Profile, in respect of which the instruction applies.

Where the instruction applies at the identity level, receiving the instruction may comprise querying the Service Profile corresponding to the SIP device and receiving the instruction as a parameter of the Service Profile.

As described above, the instruction may apply at an identity level. Alternatively, the instruction may be applied globally to the CSCF. Alternatively still, the instruction may be applied to a specific application server of the one or more application servers. The one or more application servers may comprise the specific application server, in respect of which the instruction applies (or was received).

Where the instruction applies to a specific application server, the method may further comprise sending, by the CSCF server, a third-party SIP register message in respect of each (and every) device in the set to the specific application server (in respect of which the instruction applies).

Where the instruction applies to a specific application server, the method may comprise determining that the SIP register message relates to the second set and determining that an identity profile associated with the second set requires registration of devices in the set with the specific application server (in respect of which the instruction applies).

Where the instruction applies to a specific application server, the method may further comprise disabling selective registration for the specific application server (in respect of which the instruction applies). Where the one or more application servers comprise a plurality of application servers, the method may further comprise applying selective registration to the other application servers of the plurality of application servers. In other words, for the specific application server, a registration is sent for every device in the set. However, for the other application servers, the selective behaviour defined in claim 1 is applied.

The examples described above are illustrated with respect to a second set. These methods include the steps of performing the selective behaviour in respect of the first set, receiving the instruction to disable some aspects of the behaviour, and performing non-selective or partially selective behaviour in respect of the second set. Of course, a method that omits the steps in relation to the first set and only includes the steps in relation to the second set is also possible (and such a method is also contemplated).

A network entity configured to perform the methods described above is also provided.

A computer program comprising instructions that, when executed on a processor, cause the processor to perform the methods described above is also provided.

### Brief description of the drawings

Figure 1 illustrates an example of a single IRS scenario.
Figure 2 illustrates a specific example according to existing behaviour.
Figure 3 illustrates a specific example according to the proposed behaviour.
Figure 4 illustrates a flowchart of an example method.
Figure 5 a schematic of an example network entity.

### Detailed description

CSCF handling of SIP registrations is described in 3GPP TS 23.218. Existing behaviour of the CSCF in relation to third-party registrations (particularly in multi-device scenarios) is described in 3GPP TS 29.228, which is herein incorporated by reference.

As described above, a multi-device service permits a subscriber to register multiple different devices that use the same primary identity. Outgoing calls from any of the devices will appear to originate from the same primary identity. Incoming calls will cause all registered devices to ring simultaneously. The call may be answered on any of the devices.

Each device registers with the IMS Core to authenticate, obtain credentials and initiate service. When a device sends a register to the IMS Core, the IMS Core sends a third-party registration towards the Application Server (e.g., TAS). The third-party registrations are based on matching conditions within the current subscriber profile (matched per device). Since there are multiple devices, the Core sends a third-party registration to the Application Server one time per provisioned device (provisioned in the subscriber profile or "identity profile"). For example, if there are four devices provisioned by a subscriber, every time a registration comes from any of them, the CSCF will send four registrations to the Application Server. Therefore, each device registration triggers four third-party registrations at the Core.

Whenever a new Application Server, such as an IP Short Messaging Gateway (IPSMGW) or any other SIP Application Server, is introduced in the network, the same behaviour applies. Therefore, in the example described above, in which four devices are provisioned, the CSCF would send eight third-party registration messages for each registration attempt (four to TAS and four to IPSMGW).

Any of the multiple provisioned devices can originate traffic at any point in time. However, whichever device originates the traffic, third-party registrations are produced in respect of every provisioned device. Therefore, in order to identify and create records appropriately, the one or more application servers (such as TAS or IPSMGW) need to retrieve information about the actual device/SIM that is originating the transaction. This information may be retrieved from a database (e.g., the Home Subscriber Server, HSS). However, in order to determine this information, extra signalling is required from the TAS/IPSMGW towards the HSS. Alternatively, a provisioning mechanism may be established to store all the subscriber information for each device in the multi-device set on the Application Server layer. However, doing so would duplicate information already stored on HSS (as a general principle in IMS based solutions, the HSS is the correct place for this data).

The problem of multiple third-party registrations arises whenever a MD profile is provisioned, based on a Single IRS and Shared IMPU. Moreover, extra signalling from the Application Server or provisioning flow creation is also needed in these MD profile scenarios. The existing standards (e.g., 3GPP TS 29.228) do not identify the problems or provide any means of avoiding these issues in this exact setup. However, there are design options within the standards that provide some flexibility, which the proposed methods are able to utilise to address the issues identified.

The proposed methods therefore provide an alternative to the default behaviour, to avoid the additional unnecessary third-party registrations sent towards the application server(s). The proposed methods involve sending only the registration attempt that is subject to processing at the relevant point in time. In other words, one registration from a SIP device results in one third party registration to each of the one or more application servers.

This solution would avoid multiple unnecessary third-party registration signalling and extra interaction with the HSS/provisioning systems. To implement the solution, additional logic at the CSCF network function is needed when triggering the third-party registration towards the TAS/IPSMGW.

In order to implement the proposed methods, the present application therefore provides improvements to the behaviour of the CSCF in relation to third-party registrations, specifically in multi-device scenarios. In such multi-device scenarios, the subscriber is represented in the IMS HSS using a Single IRS (Implicit Registration Set), which is a concept described in 3GPP TS 29.228.

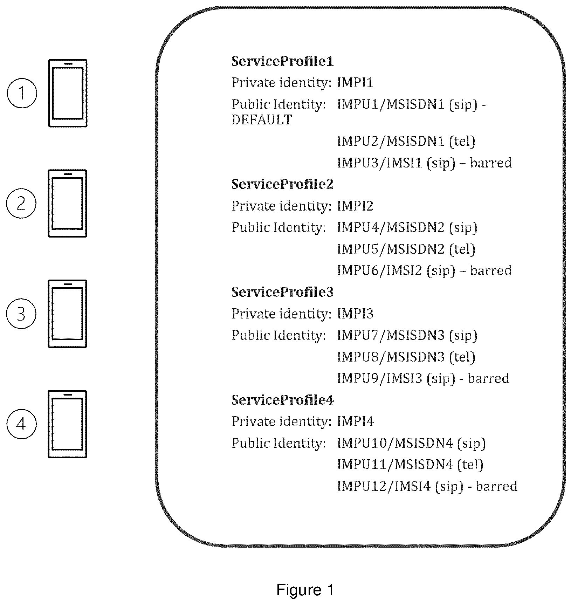

Figure 1 illustrates an example of a single IRS scenario. The IRS defines the MD subscriber in the IMS HSS. A MD subscriber has multiple mobile device subscriptions within the single IRS. This ensures the same end-user experience for each mobile device subscription. All PUIs of the user are in the same IRS/IMS subscription and all IMPIs associated with the mobile subscription are also connected to the same IRS/IMS subscription. Each IRS has one default IMPU (which is MSISDN-1 in the example illustrated in Figure 1).

The IRS can contain several Service-Profiles (SP) with their own set of IMPUs and associated iFC/SiFC (also described in 3GPP TS 29.228). When a device registers, it chooses one the IMPUs from one of the Service-Profiles (in the VoLTE case, the IMPU is derived from the IMSI).

Each device has a SIM with own IMSI (IMPI) which is used as a base to create a "temporary IMPU" that is used for IMS registration and barred for SIP traffic. As illustrated in Figure 1, each SIM is typically provisioned in HSS as one temporary SIP-URI IMPU (barred and only used for IMS registration, e.g., IMSI-2), one TEL-URI IMPU (e.g., MSISDN-2) and one SIP-URI IMPU (e.g., MSISDN-2).

A Service Profile is assigned to one or several IMPU, depending on which services are applied to the different devices. Each device/IMPU has at least one corresponding Service Profile (but each SP can be applied to multiple devices/IMPUs).

As discussed above, existing behaviour of the CSCF in relation to third-party registration for the IRS scenario may lead to multiple third-party registrations per device registration. CSCF handling of SIP registrations is described in 3GPP TS 23.218 (see, e.g., chapter 6.3).

After a SIP registration has been successfully authenticated, the S-CSCF downloads each implicitly registered public user identities associated with the registered public user identity from the HSS. The S-CSCF then determines (in order of priority) whether the triggers downloaded from the HSS match. For each Service Profile in the implicit registration set, if the registration request from the served user matches a trigger, the S-CSCF performs a third-party registration to one or more application servers (to each application server that should be informed about the user registration event of the public user identities). Receipt of the third-party registration may be needed to trigger execution of services by the corresponding Application Server.

As a result of the behaviour defined above, one device provisioned with just one Service Profile, will nevertheless trigger third-party registrations (using SIP REGISTER method) according to all SPs for the IRS. In some scenarios (e.g., where each SP comprises matching triggers for each application server), each SP will trigger a registration for each application server (all SPs and all Application Servers), resulting in a large number of third-party registrations.

In most cases, this large number of third-party registrations is unnecessary and results in inefficient signalling. Moreover, this results in unnecessary utilisation of capacity and may also cause issues at the application servers, which may perform unnecessary action based on the registrations and/or may need to determine which third-party registrations require action (filtering the third-party registrations). In order to do so, the application server may need to contact the HSS. When one device registers, each application server does not require a third-party registration from every/any registered/provisioned device, just because the application server is part of any SP in the IRS. Each application server only requires a third-party registration relating to the device being registered.

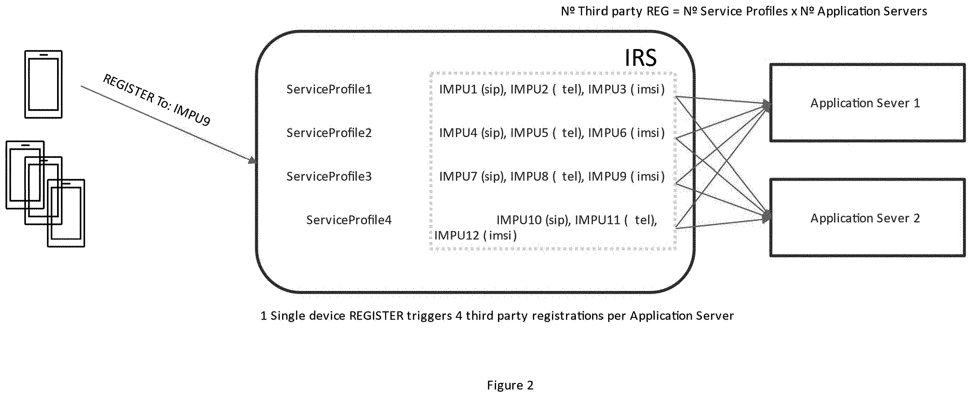

Figure 2 illustrates a specific example according to the existing CSCF behaviour. In this example, four devices are provisioned as part of the same single IRS. The four devices each have the same iFC in their corresponding Service Profile. The iFC comprise triggers for two separate application servers. When one device registers, the S-CSCF will send four third-party registrations (one for each provisioned device) to each application server. This results in a total of eight third-party registrations sent, each having the same information related to the device being registered.

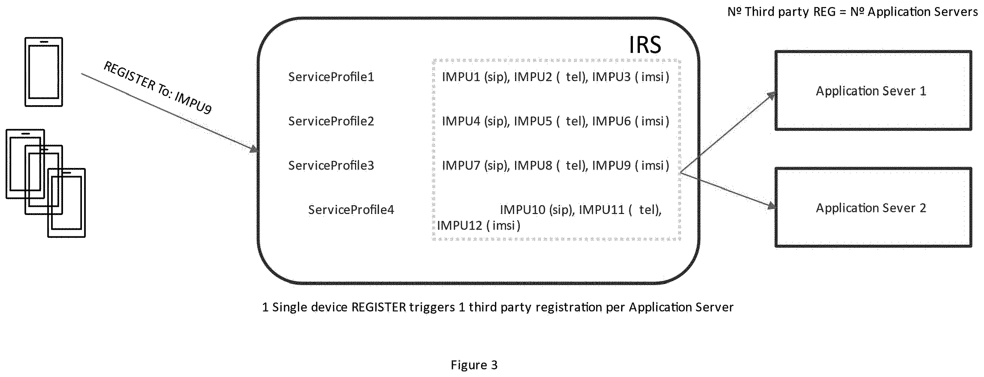

Figure 3 illustrates a specific example according to the proposed behaviour. For third-party registration execution, the CSCF will only consider the iFC associated with the SP of the "device" that is actually registering, and not the rest of the SPs within the IRS. As a result, the CSCF will not send other third-party registrations corresponding to the other devices/SPs within the same single IRS.

In some examples, this selective behaviour may be configurable per AS, meaning that this behaviour may be enabled or not, as per the specific requirements of the scenario.

As noted above, the proposed methods reduce the number of third-party registration requests sent to the AS. Moreover, the proposed methods also ensure that the association between the IMPU, IMPI and "Contact" SIP parameter will be consistent.

In the specific example illustrated in Figure 3, the number of third-party registrations is two (one for each AS), instead of 8 (4 for each AS). The device being registered is using IMPU12 which has been provisioned with SP4 and therefore the CSCF is only considering SP4 and not the other three SPs. Without the optimization in place (the scenario illustrated in Figure 2), the CSCF would have also considered all SPs (SP1, SP2, SP3 and SP4). In the worst-case scenario (all SPs have iFC which trigger to both application servers), a total of eight third-party registrations would have been sent, instead of two.

The proposed methods limit the number of third-party registrations and result in one registration per actual device identity (per relevant application server).

Already present profile definition information is conveyed from HSS to CSCF. This information may be further conveyed to the Application Server, as part of the third-party registration procedure. In this way, the Application Server is made aware of several things at once:
- A registration from a particular device, which is part of a multi-device group (IRS).
- Contact information and primary identity to be used for the particular device.
- Information about the ACTUAL identity of the SIM who is the originator of the registration (the SIM can be any out of the multi-device group, including the primary SIM or any secondary SIMs)

By providing the identity of the relevant SIM (and not providing the identity of any SIMs that are not currently registering), the need for the Application Server to interrogate the HSS any further might be obviated. The requirement for a dedicated provisioning flow into the Application Server (which would imply a duplication of information present in the HSS) might be avoided.

By conveying this information to the application server (e.g., TAS), and by optimizing the signalling from the CSCF to the application server, the proposed methods provide a flexible and efficient way to implement the logic required to fulfils all the service requirements for a multi-device scenario.

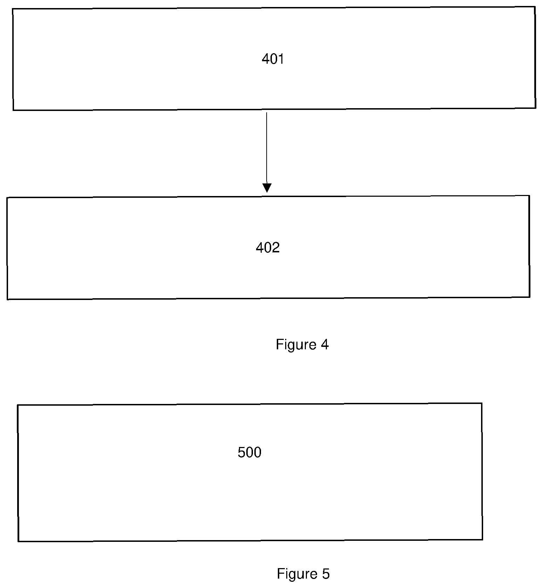

Figure 4 illustrates a flowchart of an example method of registering a session initiation protocol, SIP, device. The method comprises:
at step 401: receiving, at a Call Session Control Function, CSCF, server, a SIP register message from a SIP device, wherein the SIP device is one of a plurality of SIP devices belonging to a set;
at step 402: selectively sending, by the CSCF, a third-party SIP register message to each of one or more application servers, wherein each third-party SIP register message relates to the SIP device.

Figure 5 illustrates a schematic of an example network entity 500 (such as a CSCF). The network entity 500 is configured to perform any of the example methods described in this application.

### Alternatives

The above examples describe implementation of the proposed solution on the CSCF. However, this example should not be viewed as limiting and the skilled person would appreciate that alternatives are possible. Some alternative solutions provide a different approach to MD service and profile provisioning, in which the devices in the set are not included in a single IRS on the CSCF. These alternatives may therefore rely on the implementation of the MD logic on the Application Server, instead of making the IMS Core aware of the subscriber being a MD one.

In yet further alternative examples, a HSS profile may be defined with no extra identities, where each device is linked to the primary identity. However, such examples may lead to other challenges, such as potential regulatory issues in call-back scenarios for emergency calls using a common identity.

Whilst alternative examples do exist and are contemplated in this application, these alternatives may require more complex implementations. For example, if the MD logic is implemented on the Application Server (e.g., TAS), this may need to be duplicated on the IPSMGW as well. Moreover, these alternative approaches may be more signalling intensive than the one suggested above, in which the behaviour of the CSCF is updated, which is a common network function for all the Application Servers within IMS network.

Any of the methods described herein may be implemented as a computer program. The computer program may be configured to control a network entity to perform any method according to the disclosure. A network entity (such as a CSCF) of a IMS network may also be provided, configured to operate in accordance with certain methods disclosed herein. For example, the network entity may include a processor and at least one communication interface, particularly comprising one or both of a transmitter and receiver.

Although specific embodiments have been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server or network entity, for instance, this may actually be a pair of servers, or network entities (primary and failover), for redundancy.

Whilst the above methods are described in relation to a 4G/5G network, these methods, techniques, apparatuses, and systems may be applied to a variety of telecommunications networks (including any network that serves as access to the IMS network).

In the present invention, a SIP device may be a fixed or mobile device. Examples of the SIP device include various devices that transmit and receive user data and/or various kinds of control information.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program". A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a node, a network entity, a RAN entity, or a cell) means "one or more" (for instance one or more UE, one or more nodes, one or more network entities, one or more RAN entities, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of registering a session initiation protocol, SIP, device, the method comprising:
receiving (401), at a Call Session Control Function, CSCF, server, a SIP register message from a SIP device, wherein the SIP device is one of a plurality of SIP devices belonging to a set;
selectively sending (402), by the CSCF, a third-party SIP register message to each of one or more application servers, wherein each third-party SIP register message relates to the SIP device;
the method being **characterized in that** it further comprises:
suppressing transmission to the one or more application servers of third-party SIP register messages relating to one or more other SIP devices of the plurality of SIP devices belonging to the set, wherein the one or more other SIP devices comprise SIP devices from which no SIP register message has been received at the CSCF.

2. The method of claim 1, wherein each of the plurality of SIP devices belonging to the set has a unique public user identity, PUI, and wherein each third-party SIP register message relates to the SIP device by comprising the PUI of the SIP device.

3. The method of claim 2, further comprising obtaining, by the CSCF, the PUIs of each of the plurality of SIP devices belonging to the set from a subscriber database.

4. The method of any preceding claim, further comprising obtaining, by the CSCF, a service profile and associated filter criteria corresponding to the SIP device from a subscriber database.

5. The method of claim 4, further comprising, determining that the SIP register message from the SIP device matches a trigger in the service profile and associated filter criteria corresponding to the SIP device.

6. The method of any preceding claim, wherein the one or more application servers comprise one or more of:
a telephony application server, TAS; and
an Internet protocol short messaging gateway, IPSMGW.

7. The method of any preceding claim, wherein the SIP device comprises a subscriber identity module, SIM, or an embedded SIM, eSIM.

8. The method of any preceding claim, wherein each of the plurality of SIP devices belonging to the set share a common primary identity.

9. The method of any preceding claim wherein the CSCF and the one or more application servers reside in an IP Multimedia Subsystem, IMS.

10. The method of any preceding claim further comprising:
sending credentials to the SIP device; and
authenticating the SIP device.

11. The method of any preceding claim, further comprising:
receiving, at the CSCF server, an instruction to enable selective third-party registration.

12. The method of any preceding claim, further comprising:
receiving, at the CSCF server, an instruction to disable selective third-party registration;
receiving, at the CSCF server, a SIP register message from a second SIP device, wherein the second SIP device is one of a plurality of SIP devices belonging to a second set;
sending, by the CSCF server, a third-party SIP register message to one or more application servers, in respect of each device in the second set.

13. A network entity configured to perform the method of any preceding claim.

14. A computer program comprising instructions that, when executed on a processor, cause the processor to perform the method of any of claims 1 to 12.

## Patentansprüche

1. Verfahren zum Registrieren einer Sitzungseinleitungsprotokollvorrichtung (Session Initiation Protocol, SIP-Vorrichtung), wobei das Verfahren umfasst:
Empfangen (401), an einem Rufsitzungssteuerungsfunktionsserver (Call Session Control Function, CSCF-Server), einer SIP-Registrierungsnachricht von einer SIP-Vorrichtung, wobei es sich bei der SIP-Vorrichtung um eine aus einer Vielzahl an SIP-Vorrichtungen handelt, die einer Gruppe angehören;
selektives Senden (402), durch den CSCF, einer SIP-Registrierungsnachricht von Dritten an jeden von einem oder mehreren Anwendungsservern, wobei sich jede SIP-Registrierungsnachricht von Dritten auf die SIP-Nachricht bezieht;
wobei das Verfahren **dadurch gekennzeichnet ist, dass** es ferner umfasst:
Unterdrücken der Übermittlung an den einen oder die mehreren Anwendungsserver der SIP-Registrierungsnachrichten von Dritten, die sich auf eine oder mehrere andere SIP-Vorrichtungen der Vielzahl an SIP-Vorrichtungen beziehen, die der Gruppe angehören, wobei die eine oder die mehreren anderen SIP-Vorrichtungen SIP-Vorrichtungen umfassen, von denen keine SIP-Registrierungsnachricht an dem CSCF empfangen wurde.

2. Verfahren nach Anspruch 1, wobei jede der Vielzahl an SIP-Vorrichtungen, die der Gruppe angehören, eine eindeutige öffentliche Benutzeridentität (Public User Identity, PUI) aufweist und wobei sich jede SIP-Registrierungsnachricht von Dritten dadurch auf die SIP-Vorrichtung bezieht, dass sie die PUI der SIP-Vorrichtung umfasst.

3. Verfahren nach Anspruch 2, ferner umfassend das Abrufen, durch den CSCF, der PUIs jeder der Vielzahl an SIP-Vorrichtungen, die der Gruppe angehören, aus einer Teilnehmerdatenbank.

4. Verfahren nach einem vorstehenden Anspruch, ferner umfassend das Abrufen, durch den CSCF, eines Dienstprofils und zugeordneter Filterkriterien, die der SIP-Vorrichtung entsprechen, aus einer Teilnehmerdatenbank

5. Verfahren nach Anspruch 4, ferner umfassend das Bestimmen, dass die SIP-Registrierungsnachricht von der SIP-Vorrichtung mit einem Auslöser in dem Dienstprofil und den zugeordneten Filterkriterien übereinstimmt, die der SIP-Vorrichtung entsprechen.

6. Verfahren nach einem vorstehenden Anspruch, wobei der eine oder die mehreren Anwendungsserver eine oder mehrere umfassen von:
einem Telefonieanwendungsserver (Telephony Application Server, TAS); und
einem Internetprotokollkurznachrichtengateway (Internet Protocol Short Messaging Gateway, IPSMGW).

7. Verfahren nach einem vorstehenden Anspruch, wobei die SIP-Vorrichtung ein Teilnehmeridentitätsmodul (Subscriber Identity Module, SIM) oder ein eingebettetes SIM (Embedded SIM, eSIM) umfasst.

8. Verfahren nach einem vorstehenden Anspruch, wobei jede der Vielzahl an SIP-Vorrichtungen, die der Gruppe angehören, eine gemeinsame primäre Identität aufweisen.

9. Verfahren nach einem vorstehenden Anspruch, wobei sich der CSCF- und die einen oder mehreren Anwendungsserver in einem IP-Multimedia-Subsystem (IMS) befinden.

10. Verfahren nach einem vorstehenden Anspruch, ferner umfassend:
Senden von Anmeldedaten an die SIP-Vorrichtung; und
Authentifizieren der SIP-Vorrichtung.

11. Verfahren nach einem vorstehenden Anspruch, ferner umfassend:
Empfangen, an dem CSCF-Server, einer Anweisung zum Aktivieren der selektiven Registrierung von Dritten.

12. Verfahren nach einem vorstehenden Anspruch, ferner umfassend:
Empfangen, an dem CSCF-Server, einer Anweisung zum Deaktivieren der selektiven Registrierung von Dritten;
Empfangen, an dem CSCF-Server, einer SIP-Registrierungsnachricht von einer zweiten SIP-Vorrichtung, wobei es sich bei der zweiten SIP-Vorrichtung um eine aus einer Vielzahl an SIP-Vorrichtungen handelt, die einer zweiten Gruppe angehören;
Senden, durch den CSCF-Server, einer SIP-Registrierungsnachricht von Dritten an einen oder mehrere Anwendungsserver in Bezug auf jede Vorrichtung in der zweiten Gruppe.

13. Netzentität, konfiguriert zum Durchführen des Verfahrens nach einem vorstehenden Anspruch.

14. Computerprogramm umfassend Anweisungen, die bei Ausführung auf einer Verarbeitungseinheit veranlassen, dass die Verarbeitungseinheit das Verfahren nach einem der Ansprüche 1 bis 12 durchführt.

## Revendications

1. Procédé d'enregistrement d'un dispositif à protocole d'ouverture de session, SIP, le procédé comprenant :
la réception (401), au niveau d'un serveur de fonction de commande de session d'appel, CSCF, d'un message d'enregistrement de SIP à partir d'un dispositif SIP, dans lequel le dispositif SIP est l'un d'une pluralité de dispositifs SIP appartenant à un ensemble ;
l'envoi sélectif (402), par la CSCF, d'un message d'enregistrement de SIP tiers à chacun d'un ou de plusieurs serveurs d'application, dans lequel chaque message d'enregistrement de SIP tiers concerne le dispositif SIP ;
le procédé étant **caractérisé en ce qu'**il comprend en outre :
la suppression de la transmission aux un ou plusieurs serveurs d'application de messages d'enregistrement de SIP tiers concernant un ou plusieurs autres dispositifs SIP de la pluralité de dispositifs SIP appartenant à l'ensemble, dans lequel les un ou plusieurs autres dispositifs SIP comprennent des dispositifs SIP à partir desquels aucun message d'enregistrement de SIP n'a été reçu au niveau de la CSCF.

2. Procédé selon la revendication 1, dans lequel chacun de la pluralité de dispositifs SIP appartenant à l'ensemble a une identité d'utilisateur public, PUI, unique et dans lequel chaque message d'enregistrement de SIP tiers concerne le dispositif SIP par le fait qu'il comprend la PUI du dispositif SIP.

3. Procédé selon la revendication 2, comprenant en outre l'obtention, par la CSCF, des PUI de chacun de la pluralité de dispositifs SIP appartenant à l'ensemble à partir d'une base de données d'abonnés.

4. Procédé selon l'une quelconque des revendications précédentes, comprenant en outre l'obtention, par la CSCF, d'un profil de service et de critères de filtre associés correspondant au dispositif SIP à partir d'une base de données d'abonnés.

5. Procédé selon la revendication 4, comprenant en outre, la détermination du fait que le message d'enregistrement de SIP à partir du dispositif SIP concorde avec un déclencheur dans le profil de service et les critères de filtre associés correspondant au dispositif SIP.

6. Procédé selon l'une quelconque des revendications précédentes, dans lequel les un ou plusieurs serveurs d'application comprennent un ou plusieurs parmi :
un serveur d'application de téléphonie, TAS ; et
une passerelle de messagerie texte par protocole Internet, IPSMGW.

7. Procédé selon l'une quelconque des revendications précédentes, dans lequel le dispositif SIP comprend un module d'identité d'abonné, SIM, ou un SIM intégré, eSIM.

8. Procédé selon l'une quelconque des revendications précédentes, dans lequel chacun de la pluralité de dispositifs SIP appartenant à l'ensemble partage une identité principale commune.

9. Procédé selon l'une quelconque des revendications précédentes dans lequel la CSCF et les un ou plusieurs serveurs d'application se trouvent dans un sous-système multimédia IP, IMS.

10. Procédé selon l'une quelconque des revendications précédentes comprenant en outre :
l'envoi d'authentifiants au dispositif SIP ; et
l'authentification du dispositif SIP.

11. Procédé selon l'une quelconque des revendications précédentes, comprenant en outre :
la réception, au niveau du serveur CSCF, d'une instruction pour activer l'enregistrement sélectif de tiers.

12. Procédé selon l'une quelconque des revendications précédentes, comprenant en outre :
la réception, au niveau du serveur CSCF, d'une instruction pour désactiver l'enregistrement sélectif de tiers ;
la réception, au niveau du serveur CSCF, d'un message d'enregistrement de SIP à partir d'un deuxième dispositif SIP, dans lequel le deuxième dispositif SIP est l'un d'une pluralité de dispositifs SIP appartenant à un deuxième ensemble ;
l'envoi, par le serveur CSCF, d'un message d'enregistrement de SIP tiers à un ou plusieurs serveurs d'application, relatif à chaque dispositif dans le deuxième ensemble.

13. Entité de réseau configurée pour réaliser le procédé de l'une quelconque des revendications précédentes.

14. Programme d'ordinateur comprenant des instructions qui, lorsqu'elles sont exécutées sur un processeur, amènent le processeur à réaliser le procédé de l'une quelconque des revendications 1 à 12.
